# EUROPÄISCHE PATENTANMELDUNG

(11) **EP 4 212 674 A1**
(43) Veröffentlichungstag der Anmeldung: **19.07.2023**
(21) Anmeldenummer: 22207236.5
(22) Anmeldetag: 14.11.2022
(51) Int. Cl.: E02F 9/16, A01B 76/00, B62D 33/06, E02F 9/26, E02F 3/627, B60R 1/22

(54) **KABINE FÜR LANDWIRTSCHAFTLICHE ARBEITSMASCHINE SOWIE ARBEITSMASCHINE**

(30) Priorität: 13.01.2022 DE 102022100706
(71) Anmelder: CLAAS Tractor S.A.S., 78141 Vélizy-Villacoublay Cedex (FR)
(72) Erfinder: Johannsmann, Christoph, 33442 Herzebrock-Clarholz (DE); Reinhardt, Alexander, 33332 Gütersloh (DE); Besand, Christian, 33739 Bielefeld (DE); Wiedermann, Arno, Dr., 33378 Rheda-Wiedenbrück (DE)
(74) Vertreter: CLAAS Gruppe

(57) **Zusammenfassung**

Die Erfindung betrifft eine Kabine (1) für eine landwirtschaftliche Arbeitsmaschine (2), umfassend eine Dachstruktur (3) sowie sich an die Dachstruktur (3) anschließende Wandungen (4), die gemeinsam einen Innenraum (5) der Kabine (1) einfassen, einen in dem Innenraum (5) angeordneten Fahrersitz (6), sowie eine in einer Frontwandung (7) ausgebildete Frontscheibe (8), durch die hindurch ein auf dem Fahrersitz (6) sitzender Maschinenführer (32) einen Frontbereich (9) der Arbeitsmaschine (2) optisch erfassen kann. Um eine Alternative für ein Panoramadach zu schaffen, wird gemäß der Erfindung vorgeschlagen, die Kabine mit einer Anzeigeeinrichtung (10) auszustatten, die flächig an einer dem Innenraum (5) zugewandten Dachfläche (11) der Dachstruktur (3) angeordnet ist, sowie mit einer Primärkamera (12), mittels der optische Informationen eines Primärbereichs (13) einer äußeren Umgebung der Kabine (1) erfassbar sind, wobei der Primärbereich (13) einen Raum im Frontbereich (9) der Arbeitsmaschine (2) sowie auf einem Höhenniveau oberhalb der Dachstruktur (3) umfasst, wobei die Primärkamera (12) und die Anzeigeeinrichtung (10) derart wirkverbunden sind, dass mittels der Primärkamera (12) erfasste optische Informationen auf der Anzeigeeinrichtung (10) wiedergebbar sind.

## Beschreibung

Die Erfindung betrifft zunächst eine Kabine für eine landwirtschaftliche Arbeitsmaschine gemäß dem Oberbegriff des Anspruchs 1. Die Kabine umfasst eine Dachstruktur sowie sich daran anschließende Wandungen, die gemeinsam einen Innenraum der Kabine einfassen. In dem Innenraum ist ein Fahrersitz angeordnet. Die Kabine besitzt eine in einer Frontwandung ausgebildete Frontscheibe, durch die hindurch ein auf dem Fahrersitz sitzender Maschinenführer einen Frontbereich der Arbeitsmaschine optisch erfassen kann.

Ferner betrifft die Erfindung eine landwirtschaftliche Arbeitsmaschine nach dem Oberbegriff des Anspruchs 8.

Kabinen für landwirtschaftliche Arbeitsmaschinen sind in einer Vielzahl bekannt. Bei klassischen Arbeitsmaschinen, wie beispielsweise Traktoren, Teleskopladern oder Radladern, ist der Blick auf einen Arbeitsbereich durch die Frontscheibe möglich, so dass ein Arbeitsbereich oberhalb des Kabinendachs nicht eingesehen werden kann. Dies ist beispielsweise bei Verlade- und Transportarbeiten mit einem Frontlader von Nachteil. Um die äußeren Gegebenheiten sowie die Werkzeuge der Arbeitsmaschinen und ihre Bewegungen auch bei Arbeitsbereichen oberhalb der Dachstruktur optimal sehen zu können, können landwirtschaftliche Arbeitsmaschinen mit so genannten Panoramadächern ausgestattet werden, die einer Verglasung zumindest eines Teils einer Dachfläche der Kabine entsprechen. Die Panoramadächer erlauben dem Maschinenführer somit einen Blick oberhalb der Dachfläche, wodurch die Werkzeuge der Arbeitsmaschine beziehungsweise transportierte Güter auch in einer Höhe oberhalb der Dachfläche sicher bedient und geführt werden können. Insbesondere bei Frontladerarbeiten ist dies eine enorme Erleichterung für den Maschinenführer und vermindert fehlerhafte Bedienungen der Werkzeuge und Schäden an Gütern.

Ein Nachteil der Panoramadächer bei Arbeitsmaschinen besteht darin, dass die Kabinen von Arbeitsmaschinen grundsätzlich höheren Belastungen unterliegen und somit große Kräfte auf die Panoramadächer wirken, die nicht selten zu Schäden im Glas führen können. Bei Schäden am Glas ist das Auswechseln des gesamten Panoramadachs erforderlich, was sowohl zeitaufwändig und auch wirtschaftlich ungünstig ist.

Des Weiteren müssen Arbeitsmaschinen für einen möglichen Überrollfall ausgelegt werden. Falls ein solcher Überrollfall auftritt, sind insbesondere die Kabinenlagerung sowie die Kabine selbst hohen Belastungen ausgesetzt, denen sie standhalten müssen. Die Konstruktionen solcher Kabinen, die überdies ein Panoramadach umfassen sollen, ist aufwendiger als bei anderen Kabinen, da das Panoramadach grundsätzlich eine Schwächung der Tragstruktur der Kabine darstellt.

Ein weiteres Problem von Panoramadächern ist, dass keine Anpassung an sich wechselnde Lichtverhältnisse möglich ist. Der Maschinenführer kann beispielsweise bei direkter Sonneneinstrahlung, die durch ein Panoramadach fällt, geblendet werden. Auch ist ein Eintrag von Strahlungsenergie infolge Sonneneinstrahlung bei einem Panoramadach durchgehend vorhanden, wenngleich es womöglich nur in wenigen Anwendungsfällen der Arbeitsmaschine aus den oben genannten technischen Erwägungen heraus Vorteile bietet.

Der Erfindung liegt die Aufgabe zugrunde, eine Alternative für ein Panoramadach einer Kabine einer landwirtschaftlichen Arbeitsmaschine bereitzustellen, die die oben beschriebenen Nachteile vermeidet.

Ausgehend von der eingangs beschriebenen Kabine wird erfindungsgemäß vorgeschlagen, eine Anzeigeeinrichtung flächig an einer dem Innenraum zugewandten Dachfläche der Dachstruktur anzuordnen, sowie eine Primärkamera, mittels der optische Informationen eines Primärbereichs einer äußeren Umgebung der Kabine erfassbar sind. Der Primärbereich umfasst einen Raum im Frontbereich der Arbeitsmaschine sowie auf einem Höhenniveau oberhalb der Dachstruktur. Die Primärkamera und die Anzeigeeinrichtung sind derart wirkverbunden, dass mittels der Primärkamera erfasste optische Informationen zumindest für die Dauer eines Beobachtungszeitraums kontinuierlich auf der Anzeigeeinrichtung wiedergebbar sind. Die auf diese Weise ausgestattete Kabine ist dazu geeignet, einem Maschinenführer der zugehörigen Arbeitsmaschine die Umgebung, die er ansonsten durch ein Panoramadach sehen könnte, auf der Anzeigeeinrichtung anzuzeigen, die die optischen Informationen der Primärkamera wiedergibt. Der Primärbereich entspricht dabei vorzugsweise genau dem Bereich, den der Maschinenführer sehen könnte, wenn anstelle der Anzeigeeinrichtung in bekannter Weise ein Panoramadach in der Dachstruktur der Kabine ausgebildet wäre.

Die Wiedergabe der optischen Informationen auf der Anzeigeeinrichtung erfolgt vorzugsweise - zumindest für die Dauer eines Beobachtungszeitraums - kontinuierlich. Bei dem Beobachtungszeitraum kann es sich beispielsweise um einen begrenzten Zeitraum handeln, der beispielsweise von einem Betrieb eines Frontladers der zugehörigen Arbeitsmaschine abhängt oder manuell von einem Maschinenführer gestartet und ggf. automatisch oder ebenfalls manuell beendet wird. Beispielsweise ist es denkbar, dass die Wiedergabe der Informationen beginnt, sobald der Frontlader eine gewisse Grenzarbeitshöhe erreicht hat bzw. überschreitet. Diese kann insbesondere auf einem Niveau definiert werden, ab dem der Maschinenführer den Frontlader nicht mehr in ausreichender Weise allein durch die Frontscheibe der Kabine optisch erfassen kann. Die Anzeigeeinrichtung kann sich umgekehrt wieder abschalten, sobald die der Frontlader die Grenzarbeitshöhe wieder unterschreitet. Auch ist es denkbar, dass die Wiedergabe der optischen Informationen durchgehend stattfindet, beispielsweise beim Start der zugehörigen Arbeitsmaschine beginnt und erst bei Abschaltung derselben wieder endet. Die "kontinuierliche Wiedergabe" meint in diesem Zusammenhang eine Wiedergabe bewegter Bilder, die mittels der Primärkamera aufgenommen werden, beispielsweise mit einer Bildwiederholfrequenz von 25 oder mehr Bildern pro Sekunde. Um auch bei Nachtarbeiten eine Sicht auf den Primärbereich zu ermöglichen, kann eine Infratotkamera vorgesehen werden.

Die erfindungsgemäße Kabine hat viele Vorteile. Somit ermöglicht die Anzeigeeinrichtung dem Fahrer auch bei geschlossener und somit stabiler Dachstruktur seine äußere Umgebung im Bereich oberhalb der Dachstruktur bildlich zu erfassen, so dass er Verlade- und Räumarbeiten ordnungsgemäß bewältigen kann, ohne das Fahrzeug aufgrund von eingeschränkter Sicht verlassen zu müssen. Die beschriebenen Nachteile, die ein Panoramadach prinzipbedingt mit sich bringt, werden dabei vermieden.

Vorzugsweise kann die Kabine mindestens eine Sekundärkamera aufweisen, mittels der optische Informationen eines Sekundärbereichs der äußeren Umgebung der Kabine erfassbar sind, wobei die Sekundärkamera und die Anzeigeeinrichtung derart wirkverbunden sind, dass mittels der Sekundärkamera erfasste optische Informationen zumindest für die Dauer eines Beobachtungszeitraums kontinuierlich auf der Anzeigeeinrichtung wiedergebbar sind. Die Sekundärkamera kann beispielsweise einen Sekundärbereich erfassen, der sich in einem vorderen bodennahen Bereich befindet, so dass der Maschinenführer bei Bedarf auch einen unterhalb seiner Arbeitsmaschine befindlichen Bereich, wie beispielsweise den einer Grube, bildlich erfassen kann. Selbstverständlich kann auch vorgesehen sein, dass die Sekundärkamera einen anderen Sekundärbereich erfasst. Ferner kann der Sekundärbereich für Nachtarbeiten auch mittels einer Infrarotkamera auf der Anzeigeeinrichtung sichtbar gemacht werden.

In Bezug auf eine Sekundärkamera kann es von Vorteil sein, wenn der Sekundärbereich einen Raum in einem Heckbereich und/oder in einem Seitenbereich der Arbeitsmaschine umfasst. Auf diese Weise kann der Maschinenführer beispielsweise bei Rückwärtsfahrten ebenfalls bequem seine dortige Umgebung einsehen. Das Erfassen eines Heckbereichs und/oder eines Seitenbereichs ist vorteilhaft, um bei Rangierarbeiten Hindernisse gut wahrnehmen zu können. Ferner kann auf diese Weise auch die Sicherheit von Personen erhöht werden, die sich in der Umgebung der Arbeitsmaschine befinden, da sie von dem Maschinenführer besser wahrnehmbar sind.

Die Erfindung weiter ausgestaltend kann es vorgesehen sein, dass die Anzeigeeinrichtung einem vorderen Ende der Dachfläche zugeordnet ist, die an einen vorderen Rand der Dachstruktur angrenzt. Diese Position ist für einen Maschinenführer besonders gut und bequem zu betrachten, wobei er seinen Kopf nur wenig bewegen muss, um seinen Blick etwas nach oben zu richten. Außerdem ist diese Position besonders vorteilhaft, um die Visualisierung eines "digitalen Panoramadachs" für den Maschinenführer nahtlos in sein Arbeitsumfeld einzubinden. Somit sind die im Stand der Technik bekannten Panoramadächer zwecks möglichst einfacher Beobachtung eines Frontladers oder dergleichen typischerweise einem vorderen Rand der Dachstruktur zugeordnet, sodass eine optische Achse von einem Fahrersitz durch das Panoramadach zu dem angehobenen Frontlader verläuft. Die Anordnung der Anzeigeeinrichtung in vergleichbarer Weise führt dazu, dass der Maschinenführer sich nicht von dem Bekannten umgewöhnen muss und in virtueller Weise praktisch denselben Bereich angezeigt bekommt, den er auch sehen würde, wenn anstelle der Anzeigeeinrichtung ein übliches Panoramadach verbaut wäre.

Entsprechend kann es von besonderem Vorteil sein, wenn eine Position des Fahrersitzes in dem Innenraum, eine Position der Anzeigeeinrichtung an der Dachfläche sowie eine Anordnung und Ausrichtung der Primärkamera derart aufeinander abgestimmt sind, dass die mittels der Primärkamera erfassten optischen Informationen, die auf der Anzeigeeinrichtung wiedergegeben werden, zumindest im Wesentlichen dem entsprechen, was ein auf dem Fahrersitz sitzender Maschinenführer sehen würde, wenn die Dachstruktur anstelle mit der Anzeigeeinrichtung mit einem in Abmessungen und Position mit der Anzeigeeinrichtung übereinstimmenden Dachfenster ausgestattet wäre. Auf diese Weise wird dem Maschinenführer ein möglichst reales Bild seiner Umwelt gegeben, so dass er zuverlässig seine Tätigkeiten im Primärbereich durchführen kann.

Die Erfindung weiter ausgestaltend kann die Kabine mit einer Datenverarbeitungsanlage ausgestattet sein, die dazu eingerichtet ist, die optischen Informationen, die zur Wiedergabe auf der Anzeigeeinrichtung vorgesehen sind, mit grafischen Elementen anzureichern. Vorzugsweise wird auf diese Weise bei einem Maschinenführer bezogen auf die Anzeigeeinrichtung optisch der Eindruck eines Dachfensters erzeugt. Somit wird dem Maschinenführer der Eindruck vermittelt, dass es sich bei dem technisch erzeugten Bild um die natürliche Umgebung der Kabine handelt, was zu einem angenehmeren Arbeitsklima beiträgt. Die grafischen Elemente können zudem virtuell Informationen in die realen Bestandteile des Bilds ergänzen ("augmented reality").

Vorzugsweise kann weiterhin vorgesehen sein, dass Betriebsinformationen der Arbeitsmaschine, wie beispielsweise Motordrehzahl oder Kraftstoffverbrauch, auf der Anzeigeeinrichtung anzeigbar sind. Hierfür kann die Kabine über eine Datenverarbeitungsanlage verfügen, die für eine entsprechende Anzeige der Betriebsinformationen auf der Anzeigeeinrichtung eingerichtet ist. Ferner kann es vorteilhaft sein, wenn die Betriebsinformationen auf einem unteren Bereich der Anzeigeeinrichtung eingeblendet werden, wobei diese sowohl bei aktiver Primär- oder Sekundärkamera als auch bei deaktivierten Kameras angezeigt werden können.

Ferner wird die eingangs erwähnte Aufgabe mittels einer landwirtschaftlichen Arbeitsmaschine gelöst, die eine erfindungsgemäße Kabine besitzt. Die zuvor angeführten Vorteile der erfindungsgemäßen Kabine treffen analog auf die erfindungsgemäße Arbeitsmaschine zu.

Vorzugsweise besitzt die erfindungsgemäße Arbeitsmaschine einen Frontlader, wobei die Primärkamera derart angeordnet und ausgerichtet ist, dass sie den Frontlader zumindest bei Vorliegen des Frontladers in einer angehobenen Stellung optisch erfasst. Dies vereinfacht die Bedienung des Frontladers enorm, so dass Räum- und Verladearbeiten komfortabler durchgeführt werden können.

Die Erfindung ist nachstehend anhand eines Ausführungsbeispiels, das in den Figuren dargestellt ist, näher erläutert. Es zeigt:
- Fig. 1:: eine Seitenansicht einer landwirtschaftlichen Arbeitsmaschine mit erfindungsgemäßer Kabine,
- Fig. 2:: eine dreidimensionale Ansicht der Arbeitsmaschine gemäß Figur 1,
- Fig. 3:: eine Draufsicht auf eine Anzeigeeinrichtung der Kabine aus Figur 1 und
- Fig. 4:: eine dreidimensionale Ansicht der Anzeigeeinrichtung aus Figur 3.

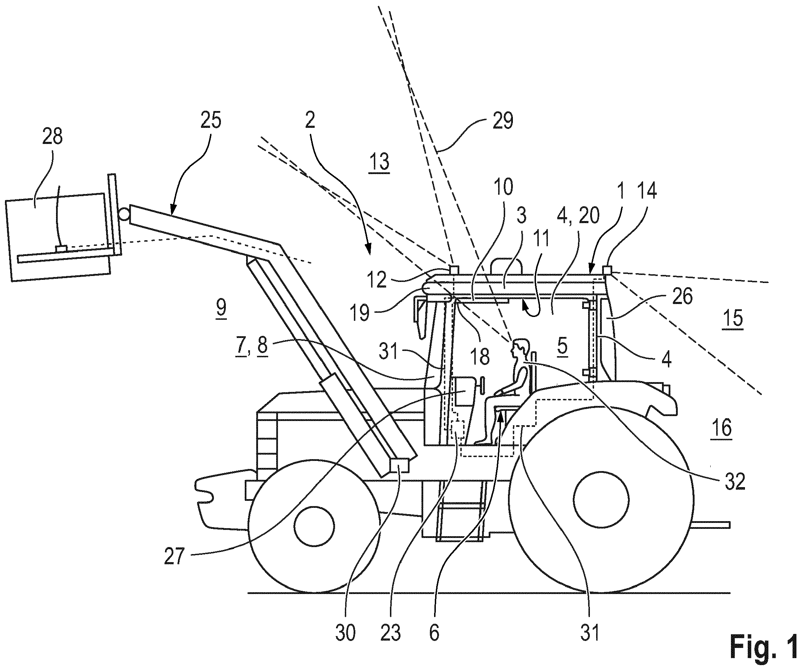

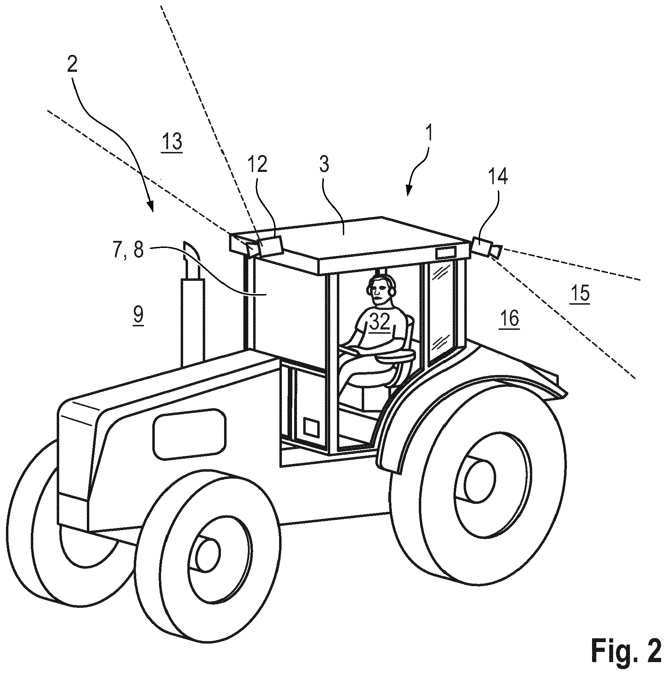

Die **Figuren 1 bis 4** zeigen ein Ausführungsbeispiel für eine erfindungsgemäße Arbeitsmaschine **2** mit einer erfindungsgemäßen Kabine **1.** Bei der Arbeitsmaschine **2** handelt es sich um einen Traktor mit einem um eine Schwenkachse **30** schwenkbaren Frontlader **25,** der mit einem Ladegut **28** bestückt ist. Die Kabine **1** besitzt eine Dachstruktur **3** sowie vier daran anschließende Wandungen **4,** die gemeinsam einen Innenraum **5** der Kabine **1** umgeben. In dem Innenraum **5** ist ein Fahrersitz **6** angeordnet, auf dem ein Maschinenführer **32** schematisch angedeutet ist.

Die Frontwandung **7** der Kabine **1** besitzt eine Frontscheibe **8,** durch die der Maschinenführer **32** einen Frontbereich **9** der Arbeitsmaschine **2** optisch erfassen kann. An einer dem Innenraum **5** der Kabine **1** zugewandten Dachfläche **11** der Dachstruktur **3** ist eine Anzeigeeinrichtung **10** positioniert, auf der von einer Primärkamera **12** erfasste Daten in Form von optischen Informationen eines Primärbereichs **13** einer äußeren Umgebung der Kabine **1** angezeigt werden.

In der **Figur 1** ist gut zu erkennen, dass der Primärbereich **13** einen Raum im Frontbereich der Arbeitsmaschine **2** darstellt, der sich auf einem Höhenniveau oberhalb der Dachstruktur **3** befindet. Der Primärbereich **13** ist mittels gestrichelter Linien, die von der Primärkamera **12** ausgehen, schematisch angedeutet. Der Primärbereich **13** ist hier insbesondere ein solcher Bereich, den der Maschinenführer **32** von dem Fahrersitz **6** nicht unmittelbar durch die Dachstruktur **3** der Kabine **1** hindurchsehen kann.

Die Primärkamera **12** und die Anzeigeeinrichtung **10** sind so verbunden, dass die mit der Primärkamera **12** erfassten optischen Informationen zumindest für die Dauer eines Beobachtungszeitraums kontinuierlich auf der Anzeigeeinrichtung **10** wiedergegeben werden. Im vorliegenden Fall sind Primärkamera **12** und Anzeigeeinrichtung **10** über Datenleitungen **31** miteinander verbunden. Selbstverständlich ist auch eine andere Art von Wirkverbindung zwischen Primärkamera **12** und Anzeigeeinrichtung **10** möglich, wie beispielsweise kabellos.

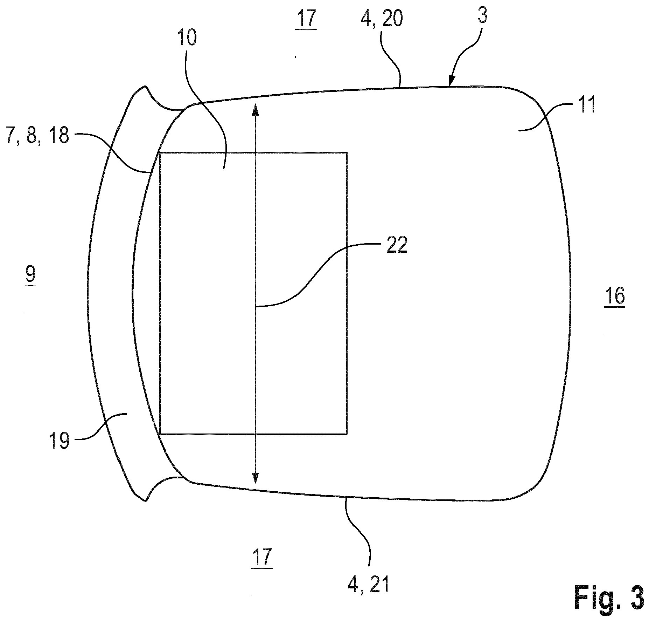

Die Anzeigeeinrichtung **10** ist so angeordnet, dass sie sich an einem vorderen Rand **19** der Dachstruktur **3,** also an einem vorderen Ende **18** der Dachfläche **11** befindet, was gut in der **Figur 3** zu erkennen ist. Dabei erstreckt sich die Anzeigeeinrichtung **10** über eine Breite, die etwa 70 % einer Breite **22** der Kabine **1** entspricht, wobei die Breite **22** zwischen zwei an die Frontwandung **7** angrenzende Seitenwandungen **20, 21** gemessen wird. Aufgrund der Position der Anzeigeeinrichtung **10** am vorderen Rand der Dachstruktur **3** kann der Maschinenführer **32** die Anzeigeeinrichtung **10** gut erblicken, ohne den Kopf aufwändig bewegen zu müssen. In der **Figur 1** ist ein Sichtkegel **29** eines Maschinenführers dargestellt, der deutlich macht, dass ein leichtes Anheben des Kopfes zur Erfassung der Anzeigeeinrichtung **10** ausreicht. Außerdem trägt die genannte Anordnung der Anzeigeeinrichtung **10** dazu bei, dass der Maschinenführer **32,** wenn er auf dem Fahrersitz **6** sitzt, bei Wiedergabe des Primärbereichs **13** auf der Anzeigeeinrichtung **10** denselben Bereich dargestellt sieht, den er sehen würde, wenn anstelle der Anzeigeeinrichtung **10** ein Glasdach in der Dachstruktur **3** angebracht wäre. Dies ergibt sich ebenfalls gut anhand der Darstellungen des Sichtkegels **29** sowie des Primärbereichs **13** in **Figur 1****.**

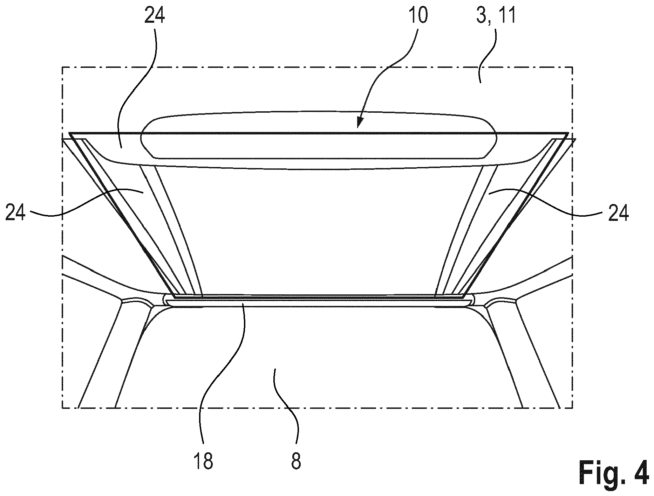

Die erfindungsgemäße Kabine **1** ist mit einer Datenverarbeitungsanlage **23** ausgestattet, mittels der die optischen Informationen, die zur Wiedergabe auf der Anzeigeeinrichtung **10** vorgesehen sind, mit grafischen Elementen **24** angereichet werden, so dass bei einem Maschinenführer **32** bezogen auf die Anzeigeeinrichtung **10** optisch der Eindruck eines Dachfensters erzeugbar ist. Auf der Anzeigeeinrichtung **10** werden daher in dem gezeigten Beispiel sowohl reale, mittels der Primärkamera **13** und/oder Sekundärkamera **14** erfasste optische Informationen als auch virtuelle grafische Elemente angezeigt, sodass sich für den Maschinenführer **32** ein aus beiden Bestandteilen zusammengesetztes Bild ergibt. Eine Ansicht auf die derart ausgebildete Anzeigeeinrichtung **10** ist in der **Figur 4** dargestellt. Es ist zu erkennen, dass es sich bei den Elementen **24** jeweils um optische Darstellungen von Randbereichen eines Dachfensters handelt. Ebenfalls ist vorgesehen, dass auf der Anzeigeeinrichtung **10** Betriebsinformationen der Arbeitsmaschine **2** angezeigt werden, beispielsweise eine Motordrehzahl einer Verbrennungskraftmaschine der Arbeitsmaschine **2** oder ein aktueller Kraftstoffverbrauch der Verbrennungskraftmaschine.

Zusätzlich zu der Primärkamera **12** ist die Kabine **1** mit einer Sekundärkamera **14** versehen, die einen Sekundärbereich **15** optisch erfasst. Im vorliegenden Fall ist die Sekundärkamera **14** an einem hinteren Bereich der Kabine **1** oberhalb eine Heckscheibe **26** platziert, so dass ein Heckbereich **16** optisch erfasst wird.

Die in den Figuren gezeigte Arbeitsmaschine **2** ist ferner mit einer Bedieneinheit **27** ausgestattet, die sich im Bereich eines Lenkrads der Kabine **1** befindet. Alternativ kann die Bedieneinheit auch in das Lenkrad integriert werden, so dass der Maschinenführer **32** diese über entsprechende Knöpfe am Lenkrad bedienen kann, oder aber als Konsole an einer anderen Stelle in der Kabine **1** ausgebildet sein. Mittels der Bedieneinheit **27** ist die Anzeigeeinrichtung **10** ansteuerbar, wobei sie bei Bedarf auch abgeschaltet werden kann. Auch ist eine Bedieneinheit in Form einer Multifunktionsarmlehne denkbar, die als Teil eines Fahrersitzes ausgebildet ist. Ferner ist die Bedieneinheit **27** dazu vorgesehen, zwischen den optischen Informationen des Primärbereichs **13** und des Sekundärbereichs **15** zu wählen. Je nachdem welcher Bereich für den Maschinenführer **32** einsehbar sein soll, kann dieser mittels der Bedieneinheit **27** den gewünschten Bereich einstellen oder aktivieren.

Es versteht sich, dass Primärkamera **12** und Sekundärkamera **14** jeweils mittels Datenleitungen **31** mit der Datenverarbeitungsanlage **23** und der Bedieneinheit **27** verbunden sind.

Alternativ kann die Sekundärkamera **14** auch so positioniert werden, dass sie sich oberhalb einer Seitenwandung **20, 21** befindet, so dass ein Seitenbereich **17** von der Sekundärkamera **14** optisch erfasst werden kann.

### Bezugszeichenliste

- 1: Kabine
- 2: Arbeitsmaschine
- 3: Dachstruktur
- 4: Wandung
- 5: Innenraum
- 6: Fahrersitz
- 7: Frontwandung
- 8: Frontscheibe
- 9: Frontbereich
- 10: Anzeigeeinrichtung
- 11: Dachfläche
- 12: Primärkamera
- 13: Primärbereich
- 14: Sekundärkamera
- 15: Sekundärbereich
- 16: Heckbereich
- 17: Seitenbereich
- 18: Ende
- 19: Rand
- 20: Seitenwandung
- 21: Seitenwandung
- 22: Breite
- 23: Datenverarbeitungsanlage
- 24: Element
- 25: Frontlader
- 26: Heckscheibe
- 27: Bedieneinheit
- 28: Ladegut
- 29: Sichtkegel
- 30: Schwenkachse
- 31: Datenleitung
- 32: Maschinenführer

## Patentansprüche

1. Kabine (1) für eine landwirtschaftliche Arbeitsmaschine (2), umfassend
- eine Dachstruktur (3) sowie sich an die Dachstruktur (3) anschließende Wandungen (4), die gemeinsam einen Innenraum (5) der Kabine (1) einfassen,
- einen in dem Innenraum (5) angeordneten Fahrersitz (6), sowie
- eine in einer Frontwandung (7) ausgebildete Frontscheibe (8), durch die hindurch ein auf dem Fahrersitz (6) sitzender Maschinenführer (32) einen Frontbereich (9) der Arbeitsmaschine (2) optisch erfassen kann,
**gekennzeichnet durch**
eine Anzeigeeinrichtung (10), die flächig an einer dem Innenraum (5) zugewandten Dachfläche (11) der Dachstruktur (3) angeordnet ist, sowie
eine Primärkamera (12), mittels der optische Informationen eines Primärbereichs (13) einer äußeren Umgebung der Kabine (1) erfassbar sind,
wobei der Primärbereich (13) einen Raum im Frontbereich (9) der Arbeitsmaschine (2) sowie auf einem Höhenniveau oberhalb der Dachstruktur (3) umfasst,
wobei die Primärkamera (12) und die Anzeigeeinrichtung (10) derart wirkverbunden sind, dass mittels der Primärkamera (12) erfasste optische Informationen auf der Anzeigeeinrichtung (10) wiedergebbar sind.

2. Kabine (1) nach Anspruch 1, **gekennzeichnet durch** mindestens eine Sekundärkamera (14), mittels der optische Informationen eines Sekundärbereichs (15) der äußeren Umgebung der Kabine (1) erfassbar sind, wobei die Sekundärkamera (14) und die Anzeigeeinrichtung (10) derart wirkverbunden sind, dass mittels der Sekundärkamera (14) erfasste optische Informationen zumindest für die Dauer eines Beobachtungszeitraums kontinuierlich auf der Anzeigeeinrichtung (10) wiedergebbar sind.

3. Kabine (1) nach Anspruch 2, **dadurch gekennzeichnet, dass** der Sekundärbereich (15) einen Raum in einem Heckbereich (16) und/oder in einem Seitenbereich (17) der Arbeitsmaschine (2) umfasst.

4. Kabine (1) nach einem der vorhergehenden Ansprüche, **dadurch gekennzeichnet, dass** die Anzeigeeinrichtung (10) einem vorderen Ende (18) der Dachfläche (11) zugeordnet ist, die an einen vorderen Rand (19) der Dachstruktur (3) angrenzt.

5. Kabine (1) nach einem der vorhergehenden Ansprüche, **dadurch gekennzeichnet, dass** eine Position des Fahrersitzes (6) in dem Innenraum (5), eine Position der Anzeigeeinrichtung (10) an der Dachfläche (11) sowie eine Anordnung und Ausrichtung der Primärkamera (12) derart aufeinander abgestimmt sind, dass die mittels der Primärkamera (12) erfassten optischen Informationen, die auf der Anzeigeeinrichtung (10) wiedergegeben werden, zumindest im Wesentlichen dem entsprechen, was ein auf dem Fahrersitz (6) sitzender Maschinenführer (32) sehen würde, wenn die Dachstruktur (3) anstelle mit der Anzeigeeinrichtung (10) mit einem in Abmessungen und Position mit der Anzeigeeinrichtung (10) übereinstimmenden Dachfenster ausgestattet wäre.

6. Kabine (1) nach einem der vorhergehenden Ansprüche, **gekennzeichnet durch** eine Datenverarbeitungsanlage (23), die dazu eingerichtet ist, die optischen Informationen, die zur Wiedergabe auf der Anzeigeeinrichtung (10) vorgesehen sind, mit grafischen Elementen (24) anzureichern, wobei vorzugsweise bei einem Maschinenführer (32) bezogen auf die Anzeigeeinrichtung (10) optisch der Eindruck eines Dachfensters erzeugbar ist.

7. Kabine (1) nach einem der vorhergehenden Ansprüche, **gekennzeichnet durch** eine Datenverarbeitungsanlage (23), die dazu eingerichtet ist, Betriebsinformationen der Arbeitsmaschine (2) auf der Anzeigeeinrichtung (10) anzuzeigen.

8. Landwirtschaftliche Arbeitsmaschine (2)
**gekennzeichnet durch**
eine Kabine (1) nach einem der vorhergehenden Ansprüche.

9. Arbeitsmaschine (2) nach Anspruch 8, **gekennzeichnet durch** einen Frontlader (25), wobei die Primärkamera (12) derart angeordnet und ausgerichtet ist, dass sie den Frontlader (25) zumindest bei Vorliegen des Frontladers (25) in einer angehobenen Stellung optisch erfasst.
